# EUROPEAN PATENT APPLICATION

(11) **EP 4 836 349 A1**
(43) Date of publication of application: **04.11.2026**
(21) Application number: 25755155.6
(22) Date of filing: 12.02.2025
(51) Int. Cl.: H04L 9/08

(54) **ELECTRONIC DEVICE FOR ENCRYPTING CONTENT AND OPERATION METHOD THEREFOR**

(30) Priority: 16.02.2024 KR 20240022615
(71) Applicant: Samsung Electronics Co., Ltd., Suwon-si, Gyeonggi-do 16677 (KR)
(72) Inventor: KIM, Jinsu, Suwon-si Gyeonggi-do 16677 (KR)
(74) Representative: Gulde & Partner
(86) International application number: PCT/KR2025/002069
(87) International publication number: WO 2025/174057

(57) **Abstract**

This electronic device (101) may comprise: at least one communication interface (190); a camera (180) or at least one sensor (176); at least one processor (120) connected to the at least one communication interface and the camera or the at least one sensor; and a memory (130) including instructions, wherein the instructions, when executed by the at least one processor, instruct the at least one processor to: generate first information related to the location of the electronic device on the basis of first data acquired by means of the camera or the at least one sensor; generate second information related to the location on the basis of second data acquired by means of the at least one communication interface; generate an encryption key used to encrypt content and data used to restore the encryption key on the basis of the first information and the second information; and encrypt the content on the basis of the encryption key.

## Description

### [TECHNICAL FIELD]

The disclosure relates to an electronic device for encrypting content and an operating method thereof.

### [BACKGROUND ART]

Recently, the amount of damage to individuals and companies due to information leaks has increased exponentially. In particular, in the case of companies, the costs related to information leaks, such as response procedures and loss of sales, are increased, and this may lead to an increase in the price of services or products of the companies. This means that the companies themselves have not been able to resolve the damage costs due to information leaks, and the companies may lose customers due to decreased competitiveness.

Although various schemes have been introduced to prevent damage caused by the information leaks, not only direct damages such as the amount of damage caused by the information leaks, but also indirect damages such as decreased reliability and competitiveness due to the information leaks, damages are continuously increasing.

The above information may be provided as a related art for the purpose of aiding understanding of the disclosure. No claim or determination has been made as to whether any of the foregoing may be applied as a prior art related to the disclosure.

### [DETAILED DESCRIPTION]

### [TECHNICAL SOLUTION]

One or more embodiments of the disclosure may provide an electronic device for encrypting content and an operating method thereof.

One or more embodiments of the disclosure may provide an electronic device for encrypting content based on data related to a place and an operating method thereof.

According to one or more example embodiments, an electronic device, may include: at least one communication interface; a camera or at least one sensor; at least one processor connected to the at least one communication interface, and the camera or the at least one sensor; and memory storing instructions that, when executed by the at least one processor, cause the at least one processor to: based on first data obtained via the camera or the at least one sensor, generate first information related to a location of the electronic device; based on second data obtained via the at least one communication interface, generate second information related to the location; based on the first information and the second information, generate an encryption key used for encrypting content, and data used for reproducing the encryption key; and encrypt the content based on the encryption key.

The instructions may further cause the at least one processor to: transmit the encrypted content and the data used for reproducing the encryption key to a server via the at least one communication interface.

The instructions may further cause the at least one processor to: apply a first encryption scheme to the first information to generate a first encryption key and data used for reproducing the first encryption key; apply the first encryption scheme to the second information to generate a second encryption key and data used for reproducing the second encryption key; and generate data used for reproducing an encrypted second encryption key which is generated by applying a second encryption scheme to the first encryption key and the data used for reproducing the second encryption key. The encryption key may include the second encryption key, and the data used for reproducing the encryption key may include the data used for reproducing the first encryption key and the data used for reproducing the encrypted second encryption key.

The instructions may further cause the at least one processor to: based on the first data being an image obtained via the camera, extract feature information including feature points from the image; set one of the feature points as a reference feature point; based on a location and a color of the reference feature point, determine a location value and a color value of the reference feature point; based on the location of the reference feature point, determine location values of remaining feature points other than the reference feature point among the feature points, and determine color values of the remaining feature points; and generate the first information including the location values and the color values of the feature points.

The instructions may further cause the at least one processor to: based on the second data being at least one signal obtained via the at least one communication interface, identify an identifier of another electronic device transmitting the at least one signal; measure received signal strength of the at least one signal; and generate the second information including the identifier of the other electronic device and the received signal strength.

The at least one signal may be a wireless fidelity (Wi-Fi) signal, the identifier of the other electronic device may be a service set identifier (SSID), and the received signal strength may be a received signal strength indicator (RSSI).

The at least one signal may be a Bluetooth signal, the identifier of the other electronic device may be a universally unique identifier (UUID), and the received signal strength may be a received signal strength indicator (RSSI).

According to one or more example embodiments, an electronic device, may include: at least one communication interface; a camera or at least one sensor; at least one processor connected to the at least one communication interface, and the camera or the at least one sensor; and memory storing instructions that, when executed by the at least one processor, cause the at least one processor to: based on first data obtained via the camera or the at least one sensor, generate first information related to a location of the electronic device; based on second data obtained via the at least one communication interface, generate second information related to the location; based on data used for reproducing an encryption key used for encrypting content, the first information, and the second information, reproduce the encryption key; and based on the encryption key, decrypt the encrypted content.

The instructions further may cause the at least one processor to: receive the encrypted content and the data used for reproducing the encryption key from a server via the at least one communication interface.

The data used for reproducing the encryption key may include data used for reproducing a first encryption key and data used for reproducing an encrypted second encryption key, and the instructions may further cause the at least one processor to: reproduce the first encryption key by applying a first decryption scheme to the first information and the data used for reproducing the first encryption key; reproduce data used for reproducing a second encryption key by applying a second decryption scheme to the first encryption key and the data used for the encrypted second encryption key; and reproduce the second encryption key by applying the first decryption scheme to the data used for reproducing the second encryption key and the second information. The encryption key may include the second encryption key.

The data used for reproducing the first encryption key may be generated by applying a first encryption scheme corresponding to the first decryption scheme to the first information, the data used for reproducing the encrypted second encryption key may be generated by applying a second encryption scheme corresponding to the second decryption scheme to the data used for reproducing the first encryption key and the data used for reproducing the second encryption key, the data used for reproducing the first encryption key may be generated by applying the first encryption scheme to the first information, and the data used for reproducing the second encryption key may be generated by applying the first encryption scheme to the second information.

The instructions may further cause the at least one processor to: based on the first data being an image obtained via the camera, extract feature information including feature points from the image; and set any one of the feature points as a reference feature point; based on a location and a color of the reference feature point, determine a location value and a color value of the reference feature point; based on the location of the reference feature point, determine location values of remaining feature points other than the reference feature point among the feature points, and determine color values of the remaining feature points; and generate the first information including the location values and the color values of the feature points.

The instructions may further cause the at least one processor to: based on the second data being at least one signal obtained via the at least one communication interface, identify an identifier of another electronic device transmitting the at least one signal; measure received signal strength of the at least one signal; and generate the second information including the identifier of the other electronic device and the received signal strength.

The at least one signal may be a wireless fidelity (Wi-Fi) signal, the identifier of the other electronic device may be a service set identifier (SSID), and the received signal strength may be a received signal strength indicator (RSSI).

The at least one signal may be a Bluetooth signal, the identifier of the other electronic device may be a universally unique identifier (UUID), and the received signal strength may be a received signal strength indicator (RSSI).

According to one or more example embodiments, a method, may include: based on first data obtained via a camera or at least one sensor, generating first information related to a location of an electronic device; based on second data obtained via at least one communication interface, generating second information related to the location; based on the first information and the second information, generating an encryption key used for encrypting content and data used for reproducing the encryption key; and encrypting the content based on the encryption key.

The method may further include: transmitting the encrypted content and the data used for reproducing the encryption key to a server.

Generating the encryption key and the data used for reproducing the encryption key may include: applying a first encryption scheme to the first information to generate a first encryption key and data used for reproducing the first encryption key; applying the first encryption scheme to the second information to generate a second encryption key and data used for reproducing the second encryption key; and generating data used for reproducing an encrypted second encryption key which is generated by applying a second encryption scheme to the first encryption key and the data used for reproducing the second encryption key. The encryption key may include the second encryption key, and the data used for reproducing the encryption key may include the data used for reproducing the first encryption key and the data used for reproducing the encrypted second encryption key.

Generating the first information may include: based on the first data being an image obtained via the camera, extracting feature information including feature points from the image; setting any one of the feature points as a reference feature point; based on a location and a color of the reference feature point, determining a location value and a color value of the reference feature point; based on the location of the reference feature point, determining location values of remaining feature points other than the reference feature point among the feature points, and determining color values of the remaining feature points; and generating the first information including the location values and the color values of the feature points.

Generating the first information may include: based on the second data being at least one signal obtained via the at least one communication interface, identifying an identifier of another electronic device transmitting the at least one signal; measuring received signal strength of the at least one signal; and generating the second information including the identifier of the other electronic device and the received signal strength.

### [DESCRIPTION OF THE DRAWINGS]

The above and other aspects, features, and advantages of the present disclosure will be more clearly understood from the following detailed description, taken in conjunction with the accompanying drawings, in which:
FIG. 1 is a block diagram illustrating an electronic device in a network environment according to one or more embodiments;
FIG. 2 is a diagram schematically illustrating a wireless communication system according to one or more embodiments of the disclosure;
FIG. 3 is a block diagram schematically illustrating configuration of a server according to one or more embodiments of the disclosure;
FIG. 4 is a diagram for explaining a fuzzy extractor scheme according to one or more embodiments of the disclosure;
FIG. 5 is a diagram for explaining a fuzzy extractor scheme according to one or more embodiments of the disclosure;
FIG. 6 is a diagram for explaining a fuzzy extractor scheme according to one or more embodiments of the disclosure;
FIG. 7 is a diagram for explaining an operation of a key generator and a reproducer according to one or more embodiments of the disclosure;
FIG. 8 is a diagram for explaining data related to a place used for encrypting content according to one or more embodiments of the disclosure;
FIG. 9 is a diagram for explaining an operation of generating information related to a place corresponding to an image according to one or more embodiments of the disclosure;
FIG. 10 is a diagram for explaining an operation of generating information related to a place corresponding to a first signal according to one or more embodiments of the disclosure;
FIG. 11 is a diagram for explaining an operation of generating information related to a place corresponding to a second signal according to one or more embodiments of the disclosure;
FIG. 12 is a diagram for explaining a scheme of encrypting content according to one or more embodiments of the disclosure;
FIG. 13 is a diagram for explaining a scheme of decrypting content according to one or more embodiments of the disclosure;
FIG. 14 is a flowchart schematically illustrating an operating method of an electronic device according to one or more embodiments of the disclosure; and
FIG. 15 is a flowchart schematically illustrating an operating method of an electronic device according to one or more embodiments of the disclosure.

### [DETAILED DESCRIPTION]

Hereinafter, one or more embodiments of the disclosure will be described in detail with reference to the accompanying drawings. In the following description of one or more embodiments of the disclosure, a detailed description of relevant known functions or configurations incorporated herein will be omitted when it is determined that the description may make the subject matter of one or more embodiments of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit one or more embodiments of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in one or more embodiments of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, one or more embodiments of the disclosure will be described in detail with reference to the accompanying drawings. Regardless of drawing signs, the same or like elements are provided with the same reference numeral, and a repeated description thereof will be omitted. Alternatively, in describing one or more embodiments of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in one or more embodiments of the disclosure, but the electronic device may be referred to as a terminal, a mobile station, a mobile equipment (ME), a user equipment (UE), a user terminal (UT), a subscriber station (SS), a wireless device, a handheld device, or an access terminal (AT). Alternatively, in one or more embodiments of the disclosure, the electronic device may be a device having a communication function such as, for example, a mobile phone, a personal digital assistant (PDA), a smart phone, a wireless MODEM, or a notebook. Alternatively, in one or more embodiments of the disclosure, the electronic device may be a device which may be connected to a plurality of electronic devices, such as a server (e.g., a cloud server).

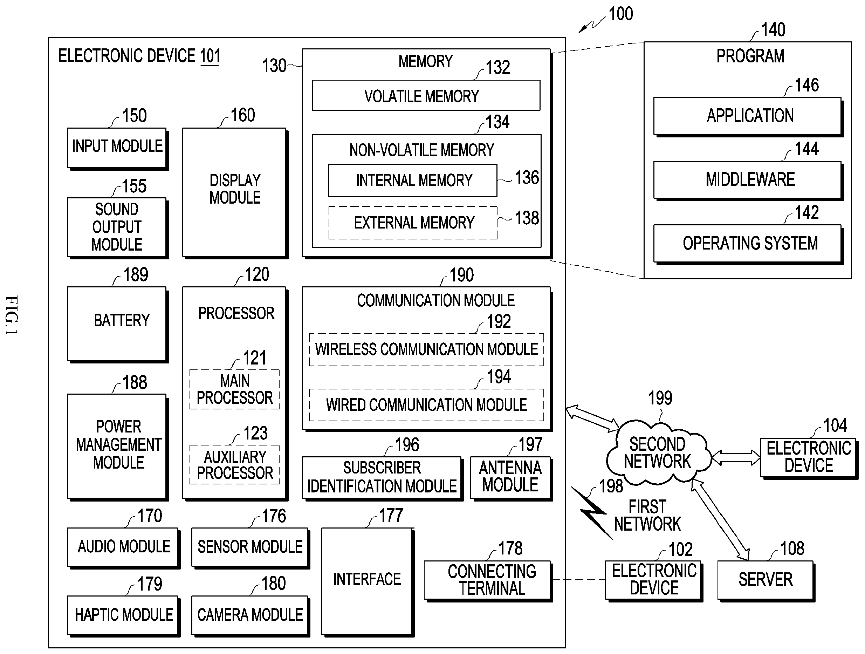

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

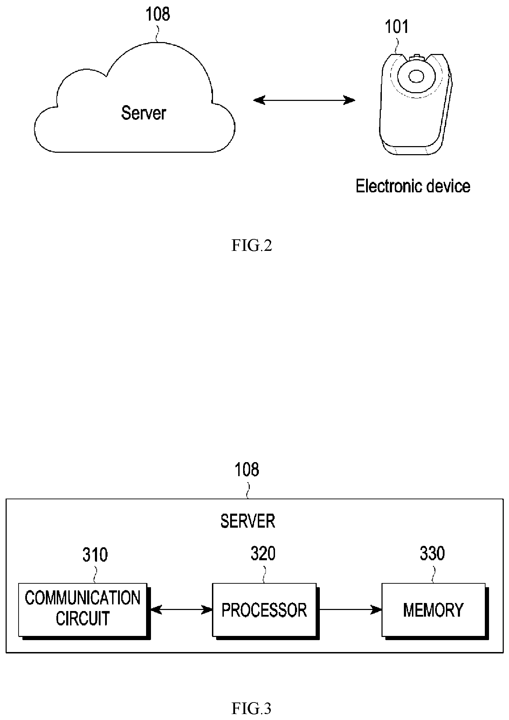

FIG. 2 is a diagram schematically illustrating a wireless communication system according to one or more embodiments of the disclosure.

Referring to FIG. 2, a wireless communication system may include an electronic device 101 (e.g., an electronic device 101 in FIG. 1) and a server 108 (e.g., a server 108 in FIG. 1).

In one or more embodiments, the electronic device 101 generates input data (e.g., real number data). In one or more embodiments, the real number data may include data related to a place at which the electronic device 101 is located (i.e. a location of the electronic device 101). The data related to the place at which the electronic device 101 is located may include an image, signal strength, sound, and/or global positioning system (GPS) data. In one or more embodiments, the real number data may include biometric data, such as face data, voice data, fingerprint data, palm data, iris data, and/or vascular data, of a user of the electronic device 101.

In one or more embodiments, the electronic device 101 may include a camera (e.g., a camera module 180 in FIG. 1). The electronic device 101 may obtain an image related to the place via the camera and generate real number data corresponding to the obtained image.

In one or more embodiments, the electronic device 101 may include at least one sensor (e.g., a sensor module 176 in FIG. 1). The electronic device 101 may sense biometric data from the user's body via the at least one sensor. The electronic device 101 may obtain a sound related to the place via the at least one sensor.

In one or more embodiments, the electronic device 101 may include at least one communication circuit or communication interface (e.g., a communication module 190 in FIG. 1). The electronic device 101 may receive a signal related to the place (e.g., a WiFi signal and/or a Bluetooth signal) via the at least one communication circuit, and obtain signal strength (e.g., a received signal strength indicator (RSSI)) based on the received signal. The electronic device 101 may obtain GPS data related to the place via the at least one communication circuit.

In one or more embodiments, the electronic device 101 may generate an encryption key (e.g., a secret key) and data (e.g., helper data) used for reproducing the encryption key based on a fuzzy extractor scheme. The electronic device 101 may generate the helper data and/or the encryption key based on the generated input data. In one or more embodiments, the encryption key may be a key used for encryption of content. In one or more embodiments, the helper data may be data used for reproducing the encryption key, and the helper data may be implemented in a form of, for example, a helper matrix.

In one or more embodiments, the encryption key may include a plurality of (e.g., 512) elements, where a set number of (e.g., 16) elements among the plurality of elements may be non-zero elements, and the remaining number of elements may be zero elements. For example, each of the 16 non-zero elements may have a magnitude of 1/4 (i.e., a value of ±1/4), and each of the remaining elements (e.g., zero elements) may have a value of 0. In this way, each of the 16 elements has the value of ±1/4, so the magnitude of the generated encryption key may have a value of 1.

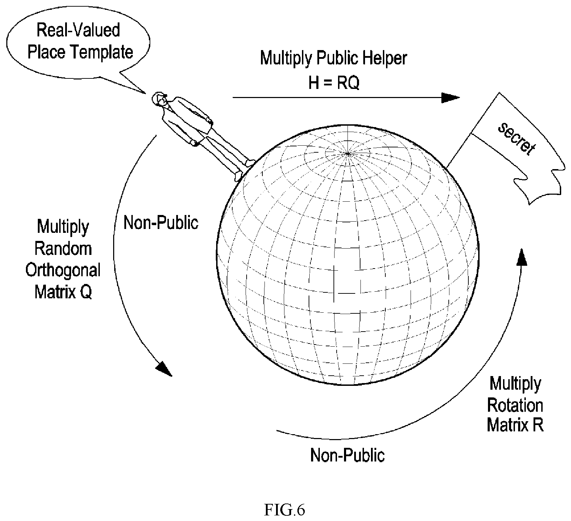

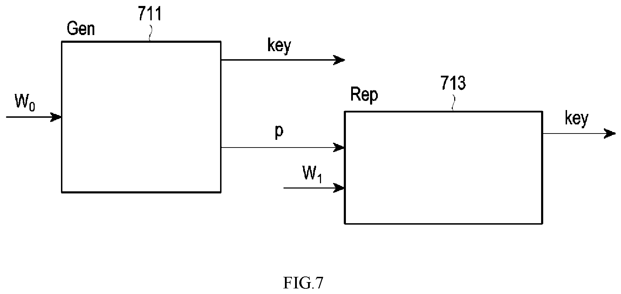

In one or more embodiments, the helper matrix may be a matrix used for relatively moving a value of a sphere (e.g., a hypersphere) on a surface of the sphere. The helper matrix may be used for transforming the input data (e.g., the real number data (e.g., the image, signal strength, sound, and/or GPS data related to the place)) into the encryption key, and may also be referred to as "public helper data." In one or more embodiments, the helper matrix may be configured based on a single moving operation, or may be configured by a plurality of moving operations. The configuration of the helper matrix will be described below with reference to FIG. 6 or FIG. 7.

In one or more embodiments, the electronic device 101 may generate encrypted content by encrypting the content based on the generated encryption key, and store (for example, upload) the encrypted content and the helper data used for reproducing the encryption key in a memory (e.g., database) of the server 108.

In one or more embodiments, the electronic device 101 may perform a decryption operation on the encrypted content. The electronic device 101 may receive (for example, download) the encrypted content and the helper data used for reproducing the encryption key used for encrypting the content from the server 108. The electronic device 101 may generate data related to a place (e.g., an image, signal strength, a sound, and/or GPS data related to the place), and apply the generated data related to the place to the received helper data to reproduce the encryption key. The electronic device 101 may decrypt the encrypted content based on the reproduced encryption key.

In one or more embodiments, the electronic device 101 may perform an error correcting operation on the reproduced encryption key. The electronic device 101 may approximate an element value of each of elements consisting of the reproduced encryption key to a set value or a zero (0) value. For example, if only 16 elements among 512 elements included in a codeword are non-zero elements, a reproduced codeword generated by a helper matrix and input data has a magnitude of 1, and each element may have an approximate value for ±1/4 or 0 (for example, + 0.25012, - 0.0034).

In this case, the electronic device 101 may perform the error correcting operation by approximating a value of an element having a value approximated to 0.25 to 1/4, approximating a value of an element having a value approximated to -0.25 to -1/4, and approximating a value of an element having a value approximated to 0 to 0. Once the error correcting operation is performed, like the encryption key, each of 16 elements among 512 elements in the reproduced encryption key may have a value of ±1/4, and each of the remaining elements may have a value of 0.

In one or more embodiments, the electronic device 101 may be implemented as, for example, but is not limited to, a biometric information scanner, a smart phone, a tablet PC, a mobile phone, a video phone, a camera, an infrared (IR) sensor device, a microphone device, a desktop PC, a laptop PC, a netbook computer, a workstation, a personal digital assistant (PDA), a portable multimedia player (PMP), an MP3 player, a medical device, and/or a wearable device.

In one or more embodiments, the server 108 may receive, from the electronic device 101, the encrypted content and the data (e.g., the helper data) used for reproducing the encryption key used for encrypting the content, and may store the received encrypted content and helper data in a memory (e.g., a database).

FIG. 3 is a block diagram schematically illustrating configuration of a server according to one or more embodiments of the disclosure.

Referring to FIG. 3, a server 108 (e.g., a server 108 in FIG. 1 or FIG. 2) may include a communication circuit (310), a processor (320), and/or memory (330).

According to one or more embodiments, a communication circuit 310 may transmit and receive a signal and/or data to and from an electronic device (e.g., an electronic device 101 in FIG. 1 or 2). The communication circuit 310 may receive, from the electronic device, encrypted content and data (e.g., helper data) used for reproducing an encryption key used for encrypting the content. The encrypted content may be generated by the electronic device, and the electronic device may generate the encrypted content by encrypting the content based on the encryption key. The encryption key may be generated based on data related to a place at which the electronic device is located, and an operation of the electronic device encrypting the content may be similar to or substantially the same as described in FIG. 2, so a detailed description thereof will be omitted herein.

Meanwhile, in FIG. 3, a case has been described as an example in which the server 108 includes three components, such as the communication circuit 310, the processor 320, and the memory 330, but the server 108 may further include other components other than the components described in FIG. 3, or the server 108 may be implemented in a form in which some of the components described in FIG. 3 are omitted.

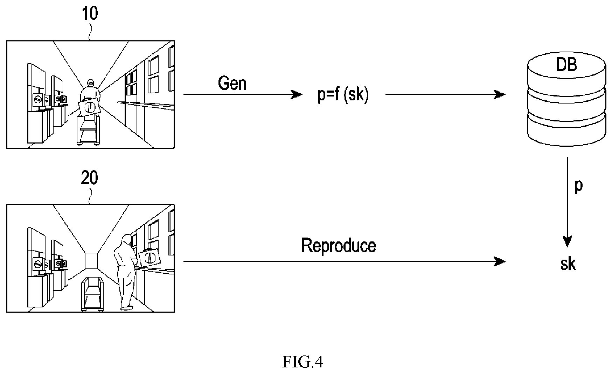

FIG. 4 is a diagram for explaining a fuzzy extractor scheme according to one or more embodiments of the disclosure.

Referring to FIG. 4, there may be various schemes for generating an encryption key based on input data (e.g., data related to a place), and a fuzzy extractor scheme may be a scheme for extracting the encryption key from the input data itself.

In the fuzzy extractor scheme, a helper matrix (p) may be generated based on data (x) related to a place, and the helper matrix (p) may be used for reproducing an encryption key if data related to a place similar to data related to a place which has been pre-registered (or pre-stored) is presented in the future. For example, as illustrated in FIG. 4, it may be assumed that the helper matrix (p) is generated based on the first real number data 10 at the time of initial registration. If the second real number data 20 which is not identical to but similar to the first real number data 10 is presented at a time point at which a decryption operation is performed, an encryption key (sk) may be reproduced based on the second real number data 20 and the helper matrix (p) (this operation is illustrated as "Reproduce" in FIG. 4). In one or more embodiments, the helper matrix (p) may be expressed as p = f (sk), where sk may represent a reproduced encryption key.

In the disclosure, an error correcting technology applicable to real number data may be used, and the error correcting technology applicable to the real number data may be described as follows.

According to one or more embodiments, an error correcting operation for input data (e.g., real number data) may operate on an n-dimensional sphere (e.g., a hypersphere) satisfying the following Equation 1. [Equation 1] ${S}^{n} = \left\{x=\left({x}_{1}, {x}_{2}, … , {x}_{n}\right) 1 {{x}_{1}}^{2}+{{x}_{2}}^{2}+…+{{x}_{n}}^{2}=1\right\}$

In Equation 1, Sⁿ may represent an n-dimensional sphere.

A distance between two vectors (e.g., two secret keys) in an n-dimensional sphere Sⁿ may be calculated using a cosine function, and an operation on the two vectors may be performed based on spherical coordinates via the cosine function. And the closest vector may be found based on orthogonal coordinates. In this case, the encryption key may be expressed as the following Equation 2. [Equation 2] $C = {U}_{i = 1}^{l} {C}_{i}$

In Equation 2, C represents the encryption key, and Cᵢ is *Cᵢ*⁻{*x*₁,*x*₂,....*xₙ*)∈ *Sⁿ* | *wt*(*x*)⁻*i*and *xⱼ*⁻ *xₖ*if *xⱼ*, *x*ₖ ≠ 0 for *all j,k*}. For example, in a four-dimensional sphere S⁴, C₁ may be {(±1,0,0,0), (0,±1,0,0), (0,0,±1,0), (0,0,0,±1)}, C₂ may be $\left\{\left(\frac{1}{\sqrt{2}}, \frac{1}{\sqrt{2}}, 0, 0\right), \left(\frac{1}{\sqrt{2}}, 0, \frac{1}{\sqrt{2}}, 0\right),…, \left(0, 0, -\frac{1}{\sqrt{2}}, -\frac{1}{\sqrt{2}}\right)\right\}$, and C₃ may be

For convenience of explanation, it will be assumed below that the encryption key is C₁₆ in S⁵¹², but it may not be limited thereto. According to one or more embodiments, there may be no restrictions on a dimension of a sphere in which the encryption key is generated, the number of elements included in the encryption key, or the encryption key selected from the sphere of the corresponding dimension.

Referring back to Equation 2, a minimum distance between two vectors in Ci may be $1 - \frac{1}{{2}^{i - 1}}$, and a minimum distance between two vectors in Cᵢ and Cⱼ may be $\frac{1}{\sqrt{{2}^{j - i}}}$ (if i<j). So, a decryption operation may be performed via a process of finding the closest encryption key for each element included in Cᵢ.

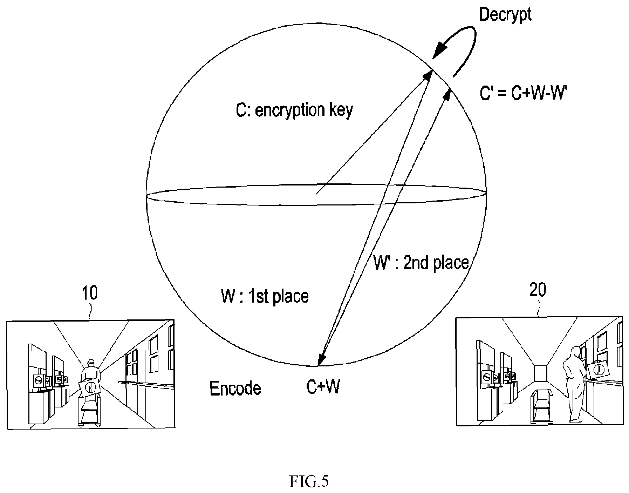

FIG. 5 is a diagram for explaining a fuzzy extractor scheme according to one or more embodiments of the disclosure.

Referring to FIG. 5, an encryption key (C) may be generated. Specifically, among a plurality of elements (e.g., 512 elements), some elements (e.g., 16 elements) have preset values (e.g., non-zero values or values of ±1/4), the remaining elements have values of 0, and one of sets having a preset size may be selected as the encryption key (C). The generated encryption key may be outputted by applying a hash function. According to one or more embodiments, in a fuzzy extractor scheme, a helper matrix (p) may be generated to cause input real number data 10 (e.g., first real number data (W) 10) to move to the encryption key (C).

In such an sphere environment, if the same rotation processing is performed on the input real number data (e.g., the first real number data (W) 10), a value (C') for second real number data (W') 20 may be the same as a value which is obtained by adding a difference value between the first real number data (W) 10 and the second real number data (W') 20 and the encryption key (C).

According to one or more embodiments, since only some of the plurality of elements included in the encryption key have a set value, not all surfaces of the sphere are available as the encryption key, so there may be coordinates which may be located, and a vector for the second real number data may be used as a secret key by finding adjacent corresponding coordinates.

As described above, since the real number data (i.e., the reproduced encryption key) moved by the helper matrix is not the same as the data related to the place (i.e., the encryption key), the helper matrix may be used as a kind of public data (e.g., a public key). In FIG. 5, a case where the encryption key is reproduced by moving the input data (e.g., the real number data) only once has been described as an example, but the encryption key may also be reproduced by moving the input data (e.g., the real number data) multiple times.

FIG. 6 is a diagram for explaining a fuzzy extractor scheme according to one or more embodiments of the disclosure.

Referring to FIG. 6, in a fuzzy extractor scheme, an encryption key may be randomly selected from a set satisfying a condition of Equation 1. In the fuzzy extractor scheme, a random orthogonal matrix satisfying *Q*∈*R*^{*n*X*n*} may be selected. Here, the random orthogonal matrix may be a matrix used for moving input data (e.g., real number data) in a random direction.

In the fuzzy extractor scheme, a rotation matrix used for rotating and moving real number data may be calculated. According to one or more embodiments, when real number data (z) satisfying *z*∈*Sⁿ*, is inputted, the first intermediate data (u = Qz) may be obtained by matrix multiplying the real number data (z) by a selected random orthogonal matrix (Q). The second intermediate data (v= c-u^{T}cu) may be obtained by performing a unit orthogonalization process (e.g., Gram-Schmidt process) on the codeword (C) and the first intermediate data (u).

Afterwards, a rotation angle (Θ) between the codeword (C) and the first intermediate data (u) may be obtained. A rotation matrix (R = I - uu^{T} - vv^{T} + [u v]R_{Θ}[u v]^{T}) may be obtained using the calculated rotation angle (Θ), the first intermediate data (u), and the second intermediate data (v). Finally, a helper matrix (H = RQ) may be generated using the obtained rotation matrix and random orthogonal matrix.

FIG. 7 is a diagram for explaining an operation of a key generator and a reproducer according to one or more embodiments of the disclosure.

Referring to FIG. 7, a key generator 711 and a reproducer 713 are disclosed. The key generator 711 and the reproducer 713 may be a hardware component (e.g., an operation block within an ASIC) within a processor (e.g., a processor 120 in FIG. 1) included in an electronic device (e.g., an electronic device 101 in FIG. 1 or FIG. 2), or may be a software module.

According to one or more embodiments, the key generator 711 may generate keys related to encryption. In one or more embodiments, the keys related to encryption may include at least one of an encryption key, a helper matrix (or helper data), or an encrypted secret key. According to one or more embodiments, the key generator 711 may select one of vectors including a plurality of elements and having a set magnitude as an encryption key. For example, if 16 elements among 512 elements included in a secret key have a set value and the remaining elements have a value of 0, the encryption key may be generated by randomly selecting 16 elements having the set value among 512 elements.

According to one or more embodiments, the key generator 711 may generate a helper matrix (p) by reflecting real number data (W₀) to the generated encryption key. The helper matrix may be implemented in a form of moving the real number data once on a spherical surface, or may be implemented in a form of moving the real number data multiple times on the spherical surface. According to one or more embodiments, if the helper matrix is implemented in the form of moving the real number data once on the spherical surface, the helper matrix may be obtained by matrix multiplying the generated encryption key by the real number data. According to one or more embodiments, if the helper matrix is obtained in a form of moving the real number data twice on the spherical surface, a random orthogonal matrix for moving the real number data in a random direction may be selected, a rotation matrix for rotating and moving the real number data may be obtained, and the helper matrix may be generated using the real number data, the selected random orthogonal matrix, and the obtained rotation matrix.

According to one or more embodiments, the key generator 711 may be implemented with an instruction for performing the operation described above. According to one or more embodiments, the key generator 711 may be implemented with hardware (e.g., an ASIC) capable of performing the operation described above.

According to one or more embodiments, the reproducer 713 may generate a reproduced encryption key when real number data (W₁) is inputted. Specifically, the reproducer 713 may obtain a reproduced encryption key by multiplying the real number data (W₁) by the helper matrix. Then, the reproducer 713 may reproduce the same encryption key if the real number data (W₁) similar to real number data (W₀) used when generating the helper matrix is inputted by making each element included in the obtained reproduced encryption key have a set value or a value of 0.

According to one or more embodiments, if real number data with noise is inputted, the reproducer 713 may reproduce a unique encryption key within a range where an angle difference between the encryption key and the inputted real number data satisfies a condition of the following Equation 3. [Equation 3] ${cos}^{- 1} \left(max\left\{1-\frac{1}{{2}^{m - 1}}⋅\frac{1}{\sqrt{2}}\right\}\right) / 2$

According to one or more embodiments, the reproducer 713 may be implemented as a set of instructions (e.g., a program) for performing the operation described above. According to one or more embodiments, the reproducer 713 may be implemented as hardware (e.g., an ASIC) capable of performing the operation described above.

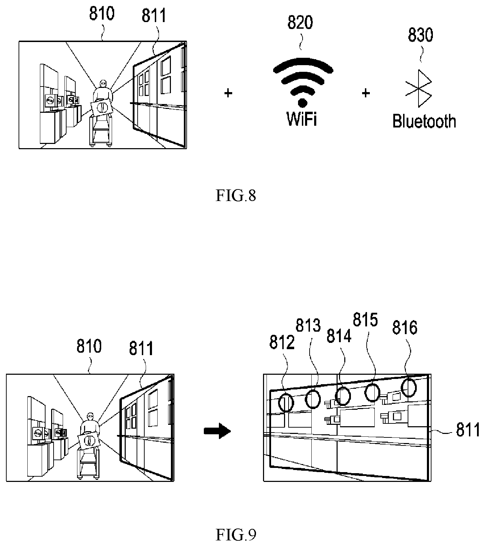

FIG. 8 is a diagram for explaining data related to a place used for encrypting content according to one or more embodiments of the disclosure.

Referring to FIG. 8, an electronic device (e.g., an electronic device 101 in FIG. 1 or FIG. 2) generates input data (e.g., real number data). In one or more embodiments, the input data may include data related to a place at which the electronic device is located. The data related to the place at which the electronic device is located may include an image, signal strength, a sound, and/or GPS data. In one or more embodiments, it will be assumed that the data related to the place includes first information, second information, and/or third information. The first information may be information generated based on an image related to the place, the second information may be information generated based on signal strength (e.g., an RSSI) of a first signal (e.g., a WiFi signal) related to the place, and the third information may be information generated based on signal strength (e.g., an RSSI) of a second signal (e.g., a Bluetooth signal) related to the place. In one or more embodiments, the data related to the place will be described as an example in which the data related to the place includes the first information, the second information, and/or the third information, but the data related to the place may further include additional information in addition to the first information, the second information, and/or the third information.

In one or more embodiments, the electronic device may obtain an image 811 related to a place 810 at which the electronic device is located via a camera (e.g., a camera module 180 in FIG. 1) and generate first information corresponding to the obtained image 811. An operation of the electronic device generating the first information corresponding to the obtain image 811 may be described as follows with reference to FIG. 9.

FIG. 9 is a diagram for explaining an operation of generating information related to a place corresponding to an image according to one or more embodiments of the disclosure.

Referring to FIG. 9, an electronic device (e.g., an electronic device 101 in FIG. 1 or FIG. 2) may obtain an image 811 (e.g., an image 811 in FIG. 8) related to a place 810 at which the electronic device 101 is located via a camera (e.g., a camera module 180 in FIG. 1).

The electronic device may extract feature information from the image 811 and obtain information (e.g., first information) related to a place based on the extracted feature information. In one or more embodiments, the feature information may include feature points 812, 813, 814, 815, and 816 included in the image 811. In one or more embodiments, a feature point may be a point which may represent a feature of the image 811, such as a corner. The electronic device may generate the first information based on the extracted feature points 812, 813, 814, 815, and 816, and this may be described as follows.

The electronic device may extract a total of five feature points 812, 813, 814, 815, and 816 from the image 811, and set a specific feature point (for example, a first feature point 812) among the total of five feature points 812, 813, 814, 815, and 816 as a reference feature point. The electronic device may set a value of the reference feature point 812 based on a location and a color of the reference feature point 812. For example, a location value of the reference feature point 812 may be set to a value of (0,0), and a color value of the reference feature point 812 may be set to a real/rational number value of a red, green, blue (RGB) type. A location value of each of the remaining feature points 813, 814, 815, and 816 may be set according to a relative location with respect to the reference feature point. In this case, the electronic device may generate the first information in a form of a vector including a real number, such as (0,0,R1,G1,B1, 0,3, R2,G2,B2, 0,5,R3,G3,B3, 0,7,R4,G4,B4, 0,9,R5,G5, B5) from the image 811. Here, R* may represent a real/rational number value of a color corresponding to Red, G* may represent a real/rational number value of a color corresponding to Green, and B* may represent a real/rational number value of a color corresponding to Blue.

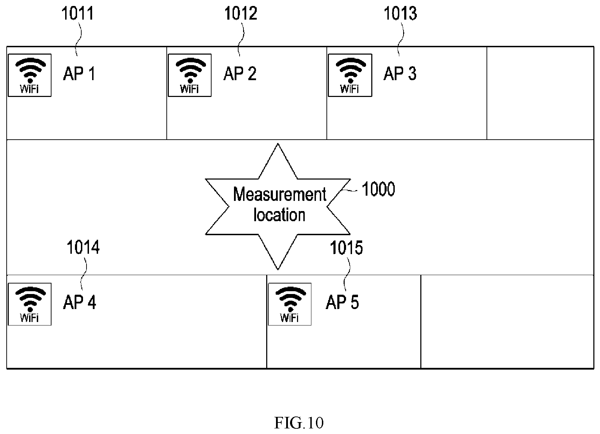

Referring back to FIG. 8, the electronic device may receive a first signal 820 (e.g., a WiFi signal) related to the place 810 at which the electronic device is located via at least one communication circuit (e.g., a communication module 190 in FIG. 1), and generate second information corresponding to signal strength (e.g., an RSSI) of the first signal. An operation of the electronic device generating second information corresponding to the received first signal may be described as follows with reference to FIG. 10.

FIG. 10 is a diagram for explaining an operation of generating information related to a place corresponding to a first signal according to one or more embodiments of the disclosure.

Referring to FIG. 10, an electronic device (e.g., an electronic device 101 in FIG. 1 or FIG. 2) may receive a first signal (e.g., a WiFi signal) related to a place at which the electronic device is located via at least one communication circuit (e.g., a communication module 190 in FIG. 1). The electronic device may receive a WiFi signal from each of a plurality of access points (APs) at a measurement location 1000.

The electronic device may extract feature information from the WiFi signal received from each of the plurality of APs, and obtain information (e.g., second information) related to the place based on the extracted feature information. In one or more embodiments, the feature information may include an identifier (e.g., a service set identifier (SSID)) of an AP included in the received WiFi signal and signal strength (e.g., an RSSI) of the received WiFi signal. The electronic device may generate the second information based on the extracted feature information, and this may be described as follows.

The electronic device may extract an SSID and an RSSI of an AP from the WiFi signal received from each of the plurality of APs, and generate the information related to the place (e.g., the second information) based on the extracted SSID and RSSI. The electronic device may generate the second information in a form of a vector including the SSID and the RSSI of the WiFi signal received from the AP corresponding to the SSID in an order of the SSIDs (e.g., in ascending order). If the plurality of APs include a total of five APs 1011, 1012, 1013, 1014, and 1015, the electronic device may generate the second information in a form of a vector including a real number, such as (SSID1,22, SSID2, 31, SSID3, 45, SSID4, 22, SSID5, 31).

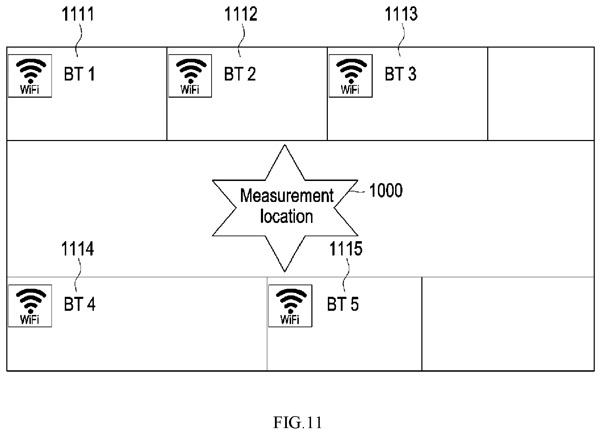

Referring back to FIG. 8, the electronic device may receive a second signal (e.g., a Bluetooth signal) related to the place 810 at which the electronic device is located via the at least one communication circuit, and may generate third information corresponding to signal strength (e.g., an RSSI) of the second signal. An operation of the electronic device generating the third information corresponding to the received second signal may be described as follows with reference to FIG. 11.

FIG. 11 is a diagram for explaining an operation of generating information related to a place corresponding to a second signal according to one or more embodiments of the disclosure.

Referring to FIG. 11, an electronic device (e.g., an electronic device 101 in FIG. 1 or FIG. 2) may receive a second signal 830 (e.g., a Bluetooth signal) related to a place at which the electronic device is located via at least one communication circuit (e.g., a communication module 190 in FIG. 1). The electronic device may receive a Bluetooth signal (e.g., an advertising signal) from each of a plurality of Bluetooth terminals (BTs) at a measurement location 1000. A BT may periodically transmit an advertising signal via an advertising operation, and the electronic device may receive the advertising signal periodically transmitted from the BT via a scanning operation.

The electronic device may extract feature information from the advertising signal received from each of the plurality of BTs, and obtain information related to the place (e.g., third information) based on the extracted feature information. In one or more embodiments, the feature information may include an identifier (e.g., a universally unique identifier (UUID)) of the BT included in the received advertising signal and signal strength (e.g., an RSSI) of the received advertising signal. The electronic device may generate the third information based on the extracted feature information, and this may be described as follows.

The electronic device may extract the UUID and the RSSI of the BT from the advertising signal received from each of the plurality of BTs, and generate the information related to the place (e.g., the third information) based on the extracted UUID and RSSI. The electronic device may generate the third information in a form of a vector including the UUID and the RSSI of the advertising signal received from the BT corresponding to the UUID, in an order of the UUIDs (e.g., in ascending order). If the plurality of BTs include a total of five BTs 1111, 1112, 1113, 1114, and 1115, the electronic device may generate the third information in a form of a vector including a real number, such as (UUID1,22, UUID2, 32, UUID3, 45, UUID4, 22, UUID5, 32).

Referring back to FIG. 8, the electronic device which generates the information related to the place, including the first information, the second information, and/or the third information, may generate an encryption key used for encrypting content by applying a first encryption scheme (e.g., a fuzzy extractor scheme) to the information related to the place. In FIG. 8, it will be assumed that the electronic device generates all of the first information, the second information, and the third information as the information related to the place.

In one or more embodiments, the electronic device may generate first helper data and a first encryption key by applying a set first encryption scheme to the first information. In one or more embodiments, the first helper data may be data used for reproducing the first encryption key.

In one or more embodiments, the electronic device may generate second helper data and a second encryption key by applying the first encryption scheme to the second information. In one or more embodiments, the second helper data may be data used for reproducing the second encryption key. The electronic device may generate modified second helper data by applying a second encryption scheme (e.g., a rotation scheme) to the first encryption key and the second helper data. In one or more embodiments, the rotation scheme may be a scheme based on a set rotation matrix. The second helper data may be based only on the second information, but the modified second helper data may be based on the first encryption key based on the first information and the second information. So, the modified second helper data may be advantageous in terms of security compared to the second helper data.

In one or more embodiments, the electronic device may generate third helper data and a third encryption key by applying the first encryption scheme to the third information. The electronic device may generate modified third helper data by applying a second encryption scheme to the second encryption key and the third helper data. The third helper data may be based only on the third information, but the modified third helper data may be based on the second encryption key based on the second information and the third information. So, the modified third helper data may be advantageous in terms of security compared to the third helper data.

In one or more embodiments, the electronic device may encrypt the content using the third encryption key to generate encrypted content. The electronic device may transmit (for example, upload), to a server (e.g., a server 108 in FIG. 1) via the at least one communication circuit, the encrypted content, and the first helper data, the modified second helper data, and the modified third helper data related to encrypting the content.

In FIG. 8, a case in which the electronic device generates the modified second helper data and the modified third helper data has been described as an example, but the electronic device may transmit, to the server, the encrypted content, the first helper data, the second helper data, and the third helper data without generating the modified second helper data and the modified third helper data.

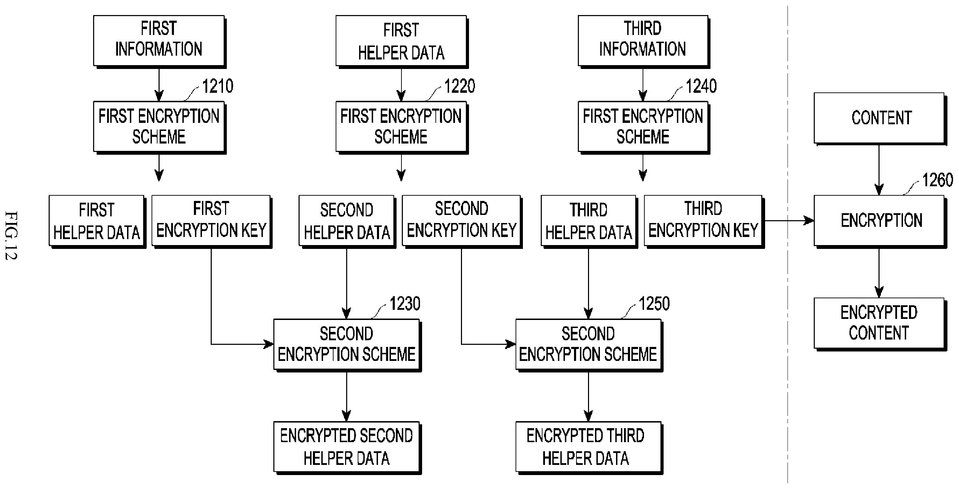

FIG. 12 is a diagram for explaining a scheme of encrypting content according to one or more embodiments of the disclosure.

Referring to FIG. 12, an electronic device (e.g., an electronic device 101 in FIG. 1 or 2) may generate input data (e.g., real number data). In one or more embodiments, the input data may include information related to a place at which the electronic device is located. The information related to the place at which the electronic device is located may include an image, signal strength, a sound, and/or GPS information. In one or more embodiments, it will be assumed that the information related to the place includes first information, second information, and/or third information. The first information may be information generated based on first data (e.g., an image) related to the place, the second information may be information generated based on second data (e.g., a first signal (e.g., a WiFi signal)) related to the place, and the third information may be information generated based on third data (e.g., a second signal (e.g., a Bluetooth signal)) related to the place. In one or more embodiments, the second information may be information generated based on signal strength (e.g., an RSSI) of the first signal, and the third information may be information generated based on signal strength (e.g., an RSSI) of the second signal. In one or more embodiments, the information related to the place will be described as an example in which the information related to the place includes the first information, the second information, and/or the third information, but the information related to the place may further include additional information in addition to the first information, the second information, and/or the third information. The first information, the second information, and/or the third information may be implemented similarly to or substantially the same as described with reference to FIGS. 8 to 11, so detailed description thereof will be omitted herein.

The electronic device may generate first helper data and a first encryption key by applying a set first encryption scheme (e.g., a fuzzy extractor scheme) to the first information in operation 1210.

The electronic device which generates the first helper data and the first encryption key may, in operation 1220, generate second helper data and a second encryption key by applying the first encryption scheme (e.g., the fuzzy extractor scheme) to the second information.

The electronic device which generates the second helper data and the second encryption key may, in operation 1230, generate encrypted second helper data by applying a second encryption scheme (e.g., a rotation scheme) to the first encryption key and the second helper data. In one or more embodiments, the rotation scheme may be a scheme based on a set rotation matrix. The second helper data may be based only on the second information, but the encrypted second helper data may be based on the first encryption key based on the first information and the second information. So, the encrypted second helper data may be advantageous in terms of security compared to the second helper data.

The electronic device which generates the encrypted second helper data may, in operation 1240, apply the first encryption scheme (e.g., the fuzzy extractor scheme) to the third information to generate third helper data and a third encryption key.

The electronic device which generates the third helper data and the third encryption key may, in operation 1250, generate encrypted third helper data by applying the second encryption scheme (e.g., the rotation scheme) to the second encryption key and the third helper data.

The electronic device which generates the encrypted third helper data may, in operation 1260, generate encrypted content by encrypting the content using the third encryption key.

The electronic device which generates the encrypted content may transmit (for example, upload), to a server (e.g., a server 108 in FIG. 1), via at least one communication circuit (e.g., a communication module 190 in FIG. 1), the encrypted content, and the first helper data, the encrypted second helper data, and the encrypted third helper data which are related to the content. The third helper data may be based only on the third information, but the encrypted third helper data may be based on the second encryption key based on the second information and the third information. So, the encrypted third helper data may be advantageous in terms of security compared to the third helper data.

In FIG. 12, an example has been described in which the electronic device generates the encrypted second helper data and the encrypted third helper data, but the electronic device may transmit, to the server, the encrypted content, the first helper data, the second helper data, and the third helper data without generating the encrypted second helper data and the encrypted third helper data.

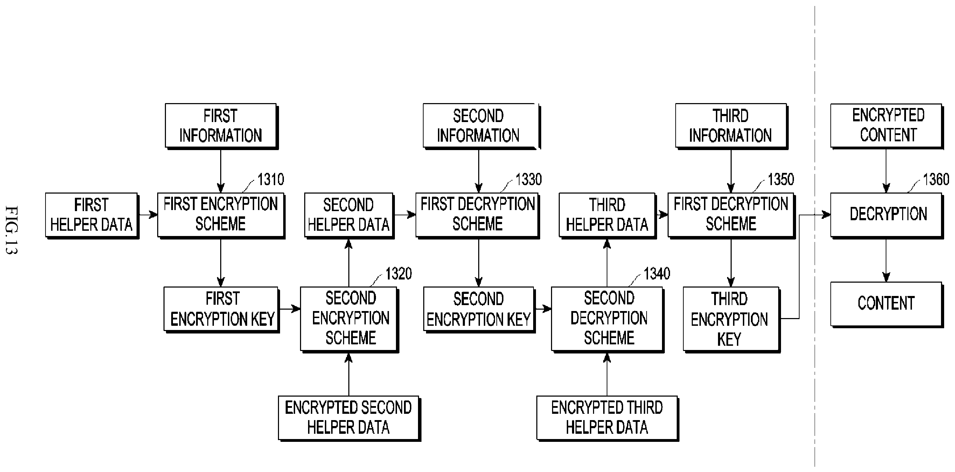

FIG. 13 is a diagram for explaining a scheme of decrypting content according to one or more embodiments of the disclosure.

Referring to FIG. 12, an electronic device (e.g., an electronic device 101 in FIG. 1 or 2) may generate input data (e.g., real number data). In one or more embodiments, the input data may include information related to a place at which the electronic device is located. The information related to the place at which the electronic device is located may include an image, signal strength, a sound, and/or GPS information. In one or more embodiments, it will be assumed that the information related to the place includes first information, second information, and/or third information. The first information may be information generated based on first data (e.g., an image) related to the place, the second information may be information generated based on second data (e.g., a first signal (e.g., a WiFi signal)) related to the place, and the third information may be information generated based on third data (e.g., a second signal (e.g., a Bluetooth signal)) related to the place. In one or more embodiments, the second information may be information generated based on signal strength (e.g., an RSSI) of the first signal, and the third information may be information generated based on signal strength (e.g., an RSSI) of the second signal. In one or more embodiments, the information related to the place will be described as an example in which the information related to the place includes the first information, the second information, and/or the third information, but the information related to the place may further include additional information in addition to the first information, the second information, and/or the third information. The first information, the second information, and/or the third information may be implemented similarly to or substantially the same as described with reference to FIGS. 8 to 11, so detailed description thereof will be omitted herein.

The electronic device may receive (for example, download) encrypted content, first helper data related to content, encrypted second helper data, and encrypted third helper data from a server (e.g., a server 108 in FIG. 1) via at least one communication circuit (e.g., a communication module 190 in FIG. 1).

The electronic device which receives the encrypted content, the first helper data related to the content, the encrypted second helper data, and the encrypted third helper data may, in operation 1310, reproduce a first encryption key by applying a set first decryption scheme (e.g., a fuzzy extractor scheme) to the first information and the first helper data. In one or more embodiments, the first decryption scheme may be a decryption scheme corresponding to a first encryption scheme.

The electronic device which reproduces the first encryption key may, in operation 1320, generate second helper data by applying a second decryption scheme (e.g., a rotation scheme) to the reproduced first encryption key and the encrypted second helper data. In one or more embodiments, the second decryption scheme may be a decryption scheme corresponding to the second encryption scheme.

The electronic device which generates the second helper data may, in operation 1330, reproduce the second encryption key by applying the first decryption scheme (e.g., the fuzzy extractor scheme) to the second information and the second helper data.

The electronic device which reproduces the second encryption key may, in operation 1340, apply the second decryption scheme (e.g., the rotation scheme) to the reproduced second encryption key and the encrypted third helper data to generate third helper data.

The electronic device which generates the third helper data may, in operation 1350, reproduce a third encryption key by applying the first decryption scheme (e.g., the fuzzy extractor scheme) to the third information and the third helper data.

The electronic device which reproduces the third encryption key may, in operation 1360, decrypt the encrypted content using the third encryption key.

As described in FIG. 13, in order to decrypt the encrypted content, the reproduced first encryption key, second encryption key, and third encryption key may need to be identical to the first encryption key, second encryption key, and third encryption key used for encrypting the content. If any one of the reproduced first encryption key, second encryption key, and third encryption key is different from the first encryption key, second encryption key, and third encryption key used for encrypting the content, the encrypted content may not be decrypted. The reproduced first encryption key, second encryption key, and third encryption key may be based on the first information, second information, and third information related to the place at which the electronic device is located, so the encrypted content may not be decrypted at a place other than the place at which the content is encrypted. So, if an encryption/decryption scheme for content proposed in one or more embodiments of the disclosure is used, security for the content may be improved based on a place.

If any one of the reproduced first encryption key, second encryption key, and third encryption key is different from the first encryption key, second encryption key, and third encryption key used for encrypting the content, the encrypted content may not be decrypted, and in this case, the electronic device may output a message indicating that decryption of the encrypted content has failed via a display (e.g., a display module 160 in FIG. 1).

According to one or more embodiments of the disclosure, an electronic device (101) may include at least one communication circuit (190), a camera (180) or at least one sensor (176), and at least one processor (120) connected to the at least one communication circuit, the camera, or the at least one sensor.

According to one or more embodiments of the disclosure, the at least one processor may be configured to, based on first data obtained via the camera or the at least one sensor, generate first information related to a place at which the electronic device is located.

According to one or more embodiments of the disclosure, the at least one processor may be configured to, based on second data obtained via the at least one communication circuit, generate second information related to the place.

According to one or more embodiments of the disclosure, the at least one processor may be configured to, based on the first information and the second information, generate an encryption key used for encrypting content and data used for reproducing the encryption key.

According to one or more embodiments of the disclosure, the at least one processor may be configured to encrypt the content based on the encryption key.

According to one or more embodiments of the disclosure, the at least one processor may be configured to transmit, to a server (108), via the at least one communication circuit, the encrypted content and the data used for reproducing the encryption key.

According to one or more embodiments of the disclosure, the at least one processor may be configured to apply a first encryption scheme to the first information to generate a first encryption key and data used for reproducing the first encryption key.

According to one or more embodiments of the disclosure, the at least one processor may be configured to apply the first encryption scheme to the second information to generate a second encryption key and data used for reproducing the second encryption key.

According to one or more embodiments of the disclosure, the at least one processor may be configured to generate data used for reproducing an encrypted second encryption key which is generated by applying a second encryption scheme to the first encryption key and the data used for reproducing the second encryption key.

According to one or more embodiments of the disclosure, the encryption key may include the second encryption key, and the data used for reproducing the encryption key may include the data used for reproducing the first encryption key and the data used for reproducing the encrypted second encryption key.

According to one or more embodiments of the disclosure, the at least one processor may be configured to, if the first data is an image obtained via the camera, extract feature information including feature points from the image.

According to one or more embodiments of the disclosure, the at least one processor may be configured to set any one of the feature points as a reference feature point.

According to one or more embodiments of the disclosure, the at least one processor may be configured to, based on a location and a color of the reference feature point, determine a location value and a color value of the reference feature point.

According to one or more embodiments of the disclosure, the at least one processor may be configured to, based on the location of the reference feature point, determine location values of remaining feature points except for the reference feature point among the feature points, and determine color values of the remaining feature points.

According to one or more embodiments of the disclosure, the at least one processor may be configured to generate the first information including the location values and the color values of the feature points.

According to one or more embodiments of the disclosure, the at least one processor may be configured to, if the second data is at least one signal obtained via the at least one communication circuit, identify an identifier of another electronic device transmitting the at least one signal.

According to one or more embodiments of the disclosure, the at least one processor may be configured to measure received signal strength of the at least one signal.

According to one or more embodiments of the disclosure, the at least one processor may be configured to generate the second information including the identifier of the other electronic device and the received signal strength.

According to one or more embodiments of the disclosure, the signal may be a wireless fidelity (Wi-Fi) signal, the identifier of the other electronic device may be a service set identifier (SSID), and the received signal strength may be a received signal strength indicator (RSSI).

According to one or more embodiments of the disclosure, the signal may be a Bluetooth signal, the identifier of the other electronic device may be a universally unique identifier (UUID), and the received signal strength may be a received signal strength indicator (RSSI).

According to one or more embodiments of the disclosure, an electronic device (101) may include at least one communication circuit (190), a camera (180) or at least one sensor (176), and at least one processor (120) connected to the at least one communication circuit, the camera, or the at least one sensor.

According to one or more embodiments of the disclosure, the at least one processor may be configured to, based on first data obtained via the camera or the at least one sensor, generate first information related to a place at which the electronic device is located.

According to one or more embodiments of the disclosure, the at least one processor may be configured to, based on second data obtained via the at least one communication circuit, generate second information related to the place.

According to one or more embodiments of the disclosure, the at least one processor may be configured to, based on data used for reproducing an encryption key used for encrypting content, the first information, and the second information, reproduce the encryption key.

According to one or more embodiments of the disclosure, the at least one processor may be configured to, based on the encryption key, decrypt the encrypted content.

According to one or more embodiments of the disclosure, the at least one processor may be configured to, receive, from a server (108), via the at least one communication circuit, the encrypted content and the data used for reproducing the encryption key.

According to one or more embodiments of the disclosure, the data used for reproducing the encryption key may include data used for reproducing a first encryption key and data used for reproducing an encrypted second encryption key.

According to one or more embodiments of the disclosure, the at least one processor may be configured to reproduce the first encryption key by applying a first decryption scheme to the first information and the data used for reproducing the first encryption key.

According to one or more embodiments of the disclosure, the at least one processor may be configured to reproduce data used for reproducing a second encryption key by applying a second decryption scheme to the first encryption key and the data used for the encrypted second encryption key.

According to one or more embodiments of the disclosure, the at least one processor may be configured to reproduce the second encryption key by applying the first decryption scheme to the data used for reproducing the second encryption key and the second information.

According to one or more embodiments of the disclosure, the encryption key may include the second encryption key.

According to one or more embodiments of the disclosure, the data used for reproducing the first encryption key may be generated by applying a first encryption scheme corresponding to the first decryption scheme to the first information.

According to one or more embodiments of the disclosure, the data used for reproducing the encrypted second encryption key may be generated by applying a second encryption scheme corresponding to the second decryption scheme to the data used for reproducing the first encryption key and the data used for reproducing the second encryption key.

According to one or more embodiments of the disclosure, the data used for reproducing the first encryption key may be generated by applying the first encryption scheme to the first information.

According to one or more embodiments of the disclosure, the data used for reproducing the second encryption key may be generated by applying the first encryption scheme to the second information.

According to one or more embodiments of the disclosure, the at least one processor may be configured to, if the first data is an image obtained via the camera, extract feature information including feature points from the image.

According to one or more embodiments of the disclosure, the at least one processor may be configured to set any one of the feature points as a reference feature point.

According to one or more embodiments of the disclosure, the at least one processor may be configured to, based on a location and a color of the reference feature point, determine a location value and a color value of the reference feature point.

According to one or more embodiments of the disclosure, the at least one processor may be configured to, based on the location of the reference feature point, determine location values of remaining feature points except for the reference feature point among the feature points, and determine color values of the remaining feature points.

According to one or more embodiments of the disclosure, the at least one processor may be configured to generate the first information including the location values and the color values of the feature points.

According to one or more embodiments of the disclosure, the at least one processor may be configured to, if the second data is at least one signal obtained via the at least one communication circuit, identify an identifier of another electronic device transmitting the at least one signal.

According to one or more embodiments of the disclosure, the at least one processor may be configured to measure received signal strength of the at least one signal.

According to one or more embodiments of the disclosure, the at least one processor may be configured to generate the second information including the identifier of the other electronic device and the received signal strength.

According to one or more embodiments of the disclosure, the signal may be a wireless fidelity (Wi-Fi) signal, the identifier of the other electronic device may be a service set identifier (SSID), and the received signal strength may be a received signal strength indicator (RSSI).

According to one or more embodiments of the disclosure, the signal may be a Bluetooth signal, the identifier of the other electronic device may be a universally unique identifier (UUID), and the received signal strength may be a received signal strength indicator (RSSI).

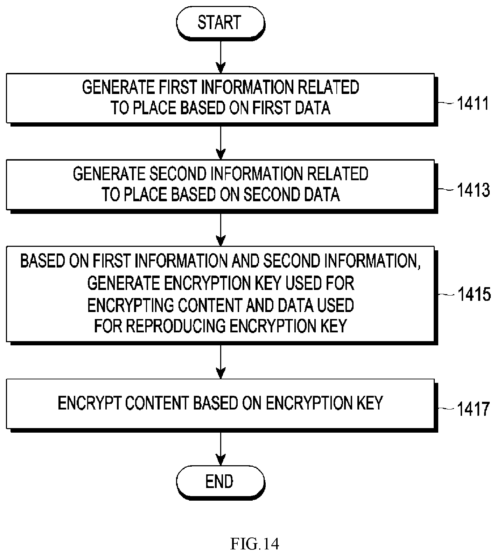

FIG. 14 is a flowchart schematically illustrating an operating method of an electronic device according to one or more embodiments of the disclosure.

Referring to FIG. 14, an electronic device (e.g., an electronic device 101 in FIG. 1 or FIG. 2) (e.g., a processor 120 in FIG. 1) may, in operation 1411, generate first information related to a place at which the electronic device is located based on first data obtained via a camera (e.g., a camera module (180) in FIG. 1) or at least one sensor (e.g., a sensor module 176 in FIG. 1).

In one or more embodiments, the electronic device may extract feature information including feature points from the image if the first data is an image obtained via the camera, set any one of the feature points as a reference feature point, based on a location and a color of the reference feature point, determine a location value and a color value of the reference feature point, based on the location of the reference feature point, determine location values of remaining feature points except for the reference feature point among the feature points, and determine color values of the remaining feature points, and generate the first information including the location values and the color values of the feature points. A scheme of generating the first information based on the first data may be similar to or substantially the same as that described in FIG. 9, so a detailed description thereof will be omitted herein.

The electronic device which generates the first information related to the place at which the electronic device is located may, in operation 1413, generate second information related to the place at which the electronic device is located based on second data obtained via at least one communication circuit (e.g., a communication module 190 in FIG. 1).

In one or more embodiments, if the second data is at least one signal obtained via the at least one communication circuit, the electronic device may identify an identifier of another electronic device transmitting the at least one signal, measure received signal strength of the at least one signal, and generate the second information including the identifier of the other electronic device and the received signal strength. For example, the signal may be a Wi-Fi signal, the identifier of the other electronic device may be an SSID, and the received signal strength may be an RSSI. For another example, the signal may be a Bluetooth signal, the identifier of the other electronic device is a UUID, and the received signal strength may be an RSSI. A scheme of generating the second information based on the second data may be similar to or substantially the same as that described in FIGS. 10 and 11, so a detailed description thereof will be omitted herein.

The electronic device which generates the second information related to the place at which the electronic device is located, may, in operation 1415, generate an encryption key used for encrypting content based on the first information and the second information, and data used for reproducing the encryption key. Hereinafter, for convenience of explanation, the data used for reproducing the encryption key will be referred to as "reproduction-related data."

In one or more embodiments, the electronic device may apply a first encryption scheme (e.g., a fuzzy extractor scheme) to the first information to generate first reproduction-related data and a first encryption key, apply the first encryption scheme to the second information to generate second reproduction-related data and a second encryption key, and apply a second encryption scheme (e.g., a rotation scheme) to the first encryption key and the second reproduction-related data to generate encrypted second reproduction-related data. In one or more embodiments, the encryption key may include the second encryption key, and the reproduction-related data may include the first reproduction-related data and the encrypted second reproduction-related data.

The electronic device which generates the encryption key used for encrypting the content and the data used for reproducing the encryption key may encrypt the content based on the encryption key in operation 1417.

The electronic device may transmit (for example, upload) the encrypted content and the reproduction-related data to a server (e.g., a server 108 in FIG. 1) via the at least one communication circuit, thereby causing the encrypted content and the reproduction-related data to be stored on the server.

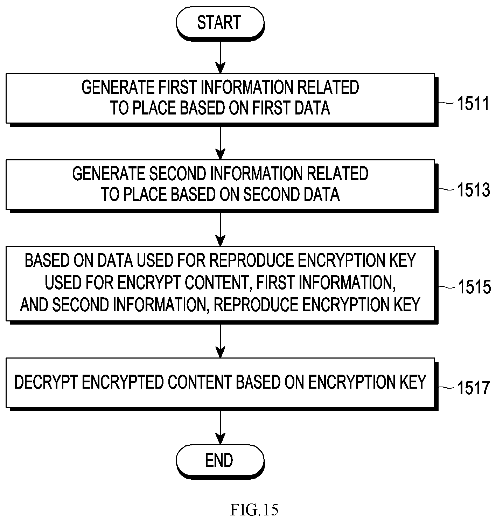

FIG. 15 is a flowchart schematically illustrating an operating method of an electronic device according to one or more embodiments of the disclosure.

Referring to FIG. 15, an electronic device (e.g., an electronic device 101 in FIG. 1 or FIG. 2) (e.g., a processor 120 in FIG. 1) may, in operation 1511, generate first information related to a place at which the electronic device is located based on first data obtained via a camera (e.g., a camera module (180) in FIG. 1) or at least one sensor (e.g., a sensor module 176 in FIG. 1).

In one or more embodiments, the electronic device may extract feature information including feature points from the image if the first data is an image obtained via the camera, set any one of the feature points as a reference feature point, based on a location and a color of the reference feature point, determine a location value and a color value of the reference feature point, based on the location of the reference feature point, determine location values of remaining feature points except for the reference feature point among the feature points, and determine color values of the remaining feature points, and generate the first information including the location values and the color values of the feature points. A scheme of generating the first information based on the first data may be similar to or substantially the same as that described in FIG. 9, so a detailed description thereof will be omitted herein.

The electronic device which generates the first information related to the place at which the electronic device is located may, in operation 1513, generate second information related to the place at which the electronic device is located based on second data obtained via at least one communication circuit (e.g., a communication module 190 in FIG. 1).

In one or more embodiments, if the second data is at least one signal obtained via the at least one communication circuit, the electronic device may identify an identifier of another electronic device transmitting the at least one signal, measure received signal strength of the at least one signal, and generate the second information including the identifier of the other electronic device and the received signal strength. For example, the signal may be a Wi-Fi signal, the identifier of the other electronic device may be an SSID, and the received signal strength may be an RSSI. For another example, the signal may be a Bluetooth signal, the identifier of the other electronic device is a UUID, and the received signal strength may be an RSSI. A scheme of generating the second information based on the second data may be similar to or substantially the same as that described in FIGS. 10 and 11, so a detailed description thereof will be omitted herein.

The electronic device, which generates the second information related to the place at which the electronic device is located, may reproduce an encryption key used for encrypting content based on data used for reproducing the encryption key, the first information, and the second information in operation 1515. Hereinafter, for convenience of explanation, the data used for reproducing the encryption key will be referred to as "reproduction-related data," and the encryption key may include a second encryption key.

One or more embodiments herein may constitute an improvement to computer functionality (i.e. improving the functioning of the computer itself) by providing a novel method of encryption based on device location. This improves data security and solves a problem in the realm of computer networks.

In one or more embodiments, the data used for reproducing the encryption key may include data used for reproducing a first encryption key and data used for reproducing an encrypted second encryption key.

In one or more embodiments, the electronic device may reproduce the first encryption key by applying a first decryption scheme to the first information and the data used for reproducing the first encryption key. The electronic device may reproduce data used for reproducing a second encryption key by applying a second decryption scheme to the first encryption key and the data used for the encrypted second encryption key. The electronic device may reproduce the second encryption key by applying the first decryption scheme to the data used for reproducing the second encryption key and the second information.

In one or more embodiments, the data used for reproducing the first encryption key may be generated by applying a first encryption scheme corresponding to the first decryption scheme to the first information. In one or more embodiments, the data used for reproducing the encrypted second encryption key may be generated by applying a second encryption scheme corresponding to the second decryption scheme to the data used for reproducing the first encryption key and the data used for reproducing the second encryption key. In one or more embodiments, the data used for reproducing the first encryption key may be generated by applying the first encryption scheme to the first information. In one or more embodiments, the data used for reproducing the second encryption key may be generated by applying the first encryption scheme to the second information.

The electronic device which reproduces the encryption key may decrypt the encrypted content based on the encryption key in operation 1517.

According to one or more embodiments of the disclosure, a method may be provided.

According to one or more embodiments of the disclosure, the method may include, based on first data obtained via a camera (180) or at least one sensor (176), generating first information related to a place at which an electronic device (101) is located.

According to one or more embodiments of the disclosure, the method may include, based on second data obtained via at least one communication circuit (190), generating second information related to the place.

According to one or more embodiments of the disclosure, the method may include, based on the first information and the second information, generating an encryption key used for encrypting content and data used for reproducing the encryption key.

According to one or more embodiments of the disclosure, the method may include encrypting the content based on the encryption key.

According to one or more embodiments of the disclosure, the method may include transmitting, to a server (108), the encrypted content and the data used for reproducing the encryption key.

According to one or more embodiments of the disclosure, generating the encryption key and the data used for reproducing the encryption key may include applying a first encryption scheme to the first information to generate a first encryption key and data used for reproducing the first encryption key.

According to one or more embodiments of the disclosure, generating the encryption key and the data used for reproducing the encryption key may include applying the first encryption scheme to the second information to generate a second encryption key and data used for reproducing the second encryption key.

According to one or more embodiments of the disclosure, generating the encryption key and the data used for reproducing the encryption key may include generating data used for reproducing an encrypted second encryption key which is generated by applying a second encryption scheme to the first encryption key and the data used for reproducing the second encryption key.

According to one or more embodiments of the disclosure, the encryption key includes the second encryption key, and the data used for reproducing the encryption key includes the data used for reproducing the first encryption key and the data used for reproducing the encrypted second encryption key.

According to one or more embodiments of the disclosure, generating the first information may include, if the first data is an image obtained via the camera, extracting feature information including feature points from the image.

According to one or more embodiments of the disclosure, generating the first information may include setting any one of the feature points as a reference feature point.

According to one or more embodiments of the disclosure, generating the first information may include, based on a location and a color of the reference feature point, determining a location value and a color value of the reference feature point.

According to one or more embodiments of the disclosure, generating the first information may include, based on the location of the reference feature point, determining location values of remaining feature points except for the reference feature point among the feature points, and determine color values of the remaining feature points.

According to one or more embodiments of the disclosure, generating the first information may include generating the first information including the location values and the color values of the feature points.

According to one or more embodiments of the disclosure, generating the first information may include, if the second data is at least one signal obtained via the at least one communication circuit, identifying an identifier of another electronic device transmitting the at least one signal.

According to one or more embodiments of the disclosure, generating the first information may include measuring received signal strength of the at least one signal.

According to one or more embodiments of the disclosure, generating the first information may include generating the second information including the identifier of the other electronic device and the received signal strength.

According to one or more embodiments of the disclosure, the signal may be a wireless fidelity (Wi-Fi) signal, the identifier of the other electronic device may be a service set identifier (SSID), and the received signal strength may be a received signal strength indicator (RSSI).

According to one or more embodiments of the disclosure, the signal may be a Bluetooth signal, the identifier of the other electronic device may be a universally unique identifier (UUID), and the received signal strength may be a received signal strength indicator (RSSI).

According to one or more embodiments of the disclosure, a method may be provided.

According to one or more embodiments of the disclosure, the method may include, based on first data obtained via a camera (180) or at least one sensor (176), generating first information related to a place at which an electronic device (101) is located.

According to one or more embodiments of the disclosure, the method may include, based on second data obtained via at least one communication circuit (190), generating second information related to the place.

According to one or more embodiments of the disclosure, the method may include, based on data used for reproducing an encryption key used for encrypting content, the first information, and the second information, reproducing the encryption key.

According to one or more embodiments of the disclosure, the method may include, based on the encryption key, decrypting the encrypted content.

According to one or more embodiments of the disclosure, the method may include receiving, from a server (108), the encrypted content and the data used for reproducing the encryption key.

According to one or more embodiments of the disclosure, the data used for reproducing the encryption key may include data used for reproducing a first encryption key and data used for reproducing an encrypted second encryption key.

According to one or more embodiments of the disclosure, reproducing the encryption key may include reproducing the first encryption key by applying a first decryption scheme to the first information and the data used for reproducing the first encryption key.

According to one or more embodiments of the disclosure, reproducing the encryption key may include reproducing data used for reproducing a second encryption key by applying a second decryption scheme to the first encryption key and the data used for the encrypted second encryption key.

According to one or more embodiments of the disclosure, reproducing the encryption key may include reproducing the second encryption key by applying the first decryption scheme to the data used for reproducing the second encryption key and the second information.

According to one or more embodiments of the disclosure, the encryption key may include the second encryption key.

According to one or more embodiments of the disclosure, the data used for reproducing the first encryption key may be generated by applying a first encryption scheme corresponding to the first decryption scheme to the first information.

According to one or more embodiments of the disclosure, the data used for reproducing the encrypted second encryption key may be generated by applying a second encryption scheme corresponding to the second decryption scheme to the data used for reproducing the first encryption key and the data used for reproducing the second encryption key.

According to one or more embodiments of the disclosure, the data used for reproducing the first encryption key may be generated by applying the first encryption scheme to the first information.

According to one or more embodiments of the disclosure, the data used for reproducing the second encryption key may be generated by applying the first encryption scheme to the second information.

According to one or more embodiments of the disclosure, generating the first information may include, if the first data is an image obtained via the camera, extracting feature information including feature points from the image.

According to one or more embodiments of the disclosure, generating the first information may include, setting any one of the feature points as a reference feature point.

According to one or more embodiments of the disclosure, generating the first information may include, based on a location and a color of the reference feature point, determining a location value and a color value of the reference feature point.

According to one or more embodiments of the disclosure, generating the first information may include, based on the location of the reference feature point, determining location values of remaining feature points except for the reference feature point among the feature points, and determine color values of the remaining feature points.

According to one or more embodiments of the disclosure, generating the first information may include, generating the first information including the location values and the color values of the feature points.

According to one or more embodiments of the disclosure, generating the second information may include, if the second data is at least one signal obtained via the at least one communication circuit, identifying an identifier of another electronic device transmitting the at least one signal.

According to one or more embodiments of the disclosure, generating the second information may include, measuring received signal strength of the at least one signal.

According to one or more embodiments of the disclosure, generating the second information may include generating the second information including the identifier of the other electronic device and the received signal strength.

According to one or more embodiments of the disclosure, the signal may be a wireless fidelity (Wi-Fi) signal, the identifier of the other electronic device may be a service set identifier (SSID), and the received signal strength may be a received signal strength indicator (RSSI).

According to one or more embodiments of the disclosure, the signal may be a Bluetooth signal, the identifier of the other electronic device may be a universally unique identifier (UUID), and the received signal strength may be a received signal strength indicator (RSSI).

According to one or more embodiments of the disclosure, a storage medium storing at least one computer-readable instruction may be provided.

According to one or more embodiments of the disclosure, the at least one instruction, when executed by at least one processor (120) of an electronic device (101), may cause the electronic device to perform at least one operation.

According to one or more embodiments of the disclosure, the at least one operation may include, based on first data obtained via a camera (180) or at least one sensor (176), generating first information related to a place at which an electronic device (101) is located.

According to one or more embodiments of the disclosure, the at least one operation may include, based on second data obtained via at least one communication circuit (190), generating second information related to the place.

According to one or more embodiments of the disclosure, the at least one operation may include, based on the first information and the second information, generating an encryption key used for encrypting content and data used for reproducing the encryption key.

According to one or more embodiments of the disclosure, the at least one operation may include encrypting the content based on the encryption key.

According to one or more embodiments of the disclosure, a storage medium storing at least one computer-readable instruction may be provided.

According to one or more embodiments of the disclosure, the at least one instruction, when executed by at least one processor (120) of an electronic device (101), may cause the electronic device to perform at least one operation.

According to one or more embodiments of the disclosure, the at least one operation may include, based on first data obtained via a camera (180) or at least one sensor (176), generating first information related to a place at which an electronic device (101) is located.

According to one or more embodiments of the disclosure, the at least one operation may include, based on second data obtained via at least one communication circuit (190), generating second information related to the place.

According to one or more embodiments of the disclosure, the at least one operation may include, based on data used for reproducing an encryption key used for encrypting content, the first information, and the second information, reproducing the encryption key.

According to one or more embodiments of the disclosure, the at least one operation may include, based on the encryption key, decrypting the encrypted content.

## Claims

1. An electronic device (101), comprising:
at least one communication interface (190);
a camera (180) or at least one sensor (176);
at least one processor (120) connected to the at least one communication interface, and the camera or the at least one sensor; and
memory (130) storing instructions that, when executed by the at least one processor, cause the at least one processor to:
based on first data obtained via the camera or the at least one sensor, generate first information related to a location of the electronic device;
based on second data obtained via the at least one communication interface, generate second information related to the location;
based on the first information and the second information, generate an encryption key used for encrypting content, and data used for reproducing the encryption key; and
encrypt the content based on the encryption key.

2. The electronic device of claim 1, wherein the instructions further cause the at least one processor to:
transmit the encrypted content and the data used for reproducing the encryption key to a server (108) via the at least one communication interface.

3. The electronic device of claim 1 or 2, wherein the instructions further cause the at least one processor to:
apply a first encryption scheme to the first information to generate a first encryption key and data used for reproducing the first encryption key;
apply the first encryption scheme to the second information to generate a second encryption key and data used for reproducing the second encryption key; and
generate data used for reproducing an encrypted second encryption key which is generated by applying a second encryption scheme to the first encryption key and the data used for reproducing the second encryption key,
wherein the encryption key comprises the second encryption key, and the data used for reproducing the encryption key comprises the data used for reproducing the first encryption key and the data used for reproducing the encrypted second encryption key.

4. The electronic device of any one of claims 1 to 3, wherein the instructions further cause the at least one processor to:
based on the first data being an image obtained via the camera, extract feature information comprising feature points from the image;
set one of the feature points as a reference feature point;
based on a location and a color of the reference feature point, determine a location value and a color value of the reference feature point;
based on the location of the reference feature point, determine location values of remaining feature points other than the reference feature point among the feature points, and determine color values of the remaining feature points; and
generate the first information comprising the location values and the color values of the feature points.

5. The electronic device of any one of claims 1 to 4, wherein the instructions further cause the at least one processor to:
based on the second data being at least one signal obtained via the at least one communication interface, identify an identifier of another electronic device transmitting the at least one signal;
measure received signal strength of the at least one signal; and
generate the second information comprising the identifier of the other electronic device and the received signal strength.

6. The electronic device of claim 5, wherein the at least one signal is a wireless fidelity (Wi-Fi) signal, the identifier of the other electronic device is a service set identifier (SSID), and the received signal strength is a received signal strength indicator (RSSI).

7. The electronic device of claim 5, wherein the at least one signal is a Bluetooth signal, the identifier of the other electronic device is a universally unique identifier (UUID), and the received signal strength is a received signal strength indicator (RSSI).

8. An electronic device (101), comprising:
at least one communication interface (190);
a camera (180) or at least one sensor (176);
at least one processor (120) connected to the at least one communication interface, and the camera or the at least one sensor; and
memory (130) storing instructions that, when executed by the at least one processor, cause the at least one processor to:
based on first data obtained via the camera or the at least one sensor, generate first information related to a location of the electronic device;
based on second data obtained via the at least one communication interface, generate second information related to the location;
based on data used for reproducing an encryption key used for encrypting content, the first information, and the second information, reproduce the encryption key; and
based on the encryption key, decrypt the encrypted content.

9. The electronic device of claim 8, wherein the instructions further cause the at least one processor to:
receive the encrypted content and the data used for reproducing the encryption key from a server (108) via the at least one communication interface.

10. The electronic device of claim 8 or 9,
wherein the data used for reproducing the encryption key comprises data used for reproducing a first encryption key and data used for reproducing an encrypted second encryption key, and
wherein the instructions further cause the at least one processor to:
reproduce the first encryption key by applying a first decryption scheme to the first information and the data used for reproducing the first encryption key;
reproduce data used for reproducing a second encryption key by applying a second decryption scheme to the first encryption key and the data used for the encrypted second encryption key; and
reproduce the second encryption key by applying the first decryption scheme to the data used for reproducing the second encryption key and the second information, and
wherein the encryption key comprises the second encryption key.

11. The electronic device of claim 10,
wherein the data used for reproducing the first encryption key is generated by applying a first encryption scheme corresponding to the first decryption scheme to the first information,
wherein the data used for reproducing the encrypted second encryption key is generated by applying a second encryption scheme corresponding to the second decryption scheme to the data used for reproducing the first encryption key and the data used for reproducing the second encryption key,
wherein the data used for reproducing the first encryption key is generated by applying the first encryption scheme to the first information, and
wherein the data used for reproducing the second encryption key is generated by applying the first encryption scheme to the second information.

12. The electronic device of any one of claims 8 to 11, wherein the instructions further cause the at least one processor to:
based on the first data being an image obtained via the camera, extract feature information comprising feature points from the image; and
set any one of the feature points as a reference feature point;
based on a location and a color of the reference feature point, determine a location value and a color value of the reference feature point;
based on the location of the reference feature point, determine location values of remaining feature points other than the reference feature point among the feature points, and determine color values of the remaining feature points; and
generate the first information comprising the location values and the color values of the feature points.

13. The electronic device of any one of claims 8 to 12, wherein the instructions further cause the at least one processor to:
based on the second data being at least one signal obtained via the at least one communication interface, identify an identifier of another electronic device transmitting the at least one signal;
measure received signal strength of the at least one signal; and
generate the second information comprising the identifier of the other electronic device and the received signal strength.

14. The electronic device of claim 13, wherein the at least one signal is a wireless fidelity (Wi-Fi) signal, the identifier of the other electronic device is a service set identifier (SSID), and the received signal strength is a received signal strength indicator (RSSI).

15. The electronic device of claim 13, wherein the at least one signal is a Bluetooth signal, the identifier of the other electronic device is a universally unique identifier (UUID), and the received signal strength is a received signal strength indicator (RSSI).
